(19) **Europäisches Patentamt** / **European Patent Office** / **Office européen des brevets**

(11) **EP 3 499 315 A1**

(12) **EUROPEAN PATENT APPLICATION**

(43) Date of publication:
**19.06.2019 Bulletin 2019/25**

(51) Int Cl.:
**G03H 1/22** (2006.01)     **G03H 1/00** (2006.01)

(21) Application number: **17306784.4**

(22) Date of filing: **15.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **InterDigital CE Patent Holdings
75017 Paris (FR)**

(72) Inventors:
• **SEIFI, MOZHDEH
  35576 CESSON SEVIGNE CEDEX (FR)**
• **REINHARD, ERIK
  35576 CESSON SEVIGNE CEDEX (FR)**
• **DAMGHANIAN, MITRA
  35576 CESSON SEVIGNE CEDEX (FR)**

(74) Representative: **Huchet, Anne et al
InterDigital CE Patent Holdings
20, rue Rouget de Lisle
92130 Issy-les-Moulineaux (FR)**

(54) **A METHOD FOR GENERATING A HOLOGRAPHIC VERSION OF A VIDEO CONTENT USING A LASER DISPLAY SYSTEM, AND CORRESPONDING SYSTEM AND COMPUTER PROGRAM PRODUCT**

(57) The disclosure relates to a method for generating a holographic version of a video content, using a laser display system, said method comprising:
- obtaining (11) at least one audio content,
- setting (12) at least one parameter of the laser display system or of the video content, taking account of said audio content,
- generating (13) the holographic version of the video content from a laser-induced plasma, the sound produced by the laser-induced plasma being shaped, through the settings, to reproduce said audio content.

Fig. 1

EP 3 499 315 A1

23

231

232

22

221

21

<u>Fig. 2</u>

**Description**

**1. Technical field**

The present disclosure relates to the field of signal processing, and more specifically, to the processing of image or video content.

More particularly, the disclosure relates to a method for generating a hologram from a laser-induced plasma that uses the sound produced by the laser-induced plasma to transmit audio information.

The disclosure is particularly adapted to any applications where holograms are of interest.

**2. Background**

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Holograms are multi-dimensional visual representation of a content that seems to float mid-air.

Holograms can be generated from a laser-induced plasma, using a laser display system. More specifically, a 3D holographic laser display system operates by ionizing molecules of a host medium, for example the air, at specific times and at specific locations in space, so that they release extra energy in the form of bluish-white photons that can be seen easily. The ionization thus produces a small flash of light. The plasma photons are known as 3D pixels, or rather voxels.

By carrying out this ionization in a 3D voxelized space, volumetric images may be projected in air.

The lasers used to generate 3D holograms are for example nanosecond lasers, which emit optical pulses with the duration in the range of nanoseconds, or femtosecond lasers, which emit optical pulses with the duration in the range of femtoseconds, and usually with lower energy compared to nanosecond lasers.

For example, the document "Fairy Lights in Femtoseconds: Aerial and Volumetric Graphics Rendered by Focused Femtosecond Laser Combined with Computational Holographic Fields" (Yoichi Ochiai et al., ACM Trans. Graph.35, 2, Article 17 (February 2016)) discloses a technique for generating 3D hologram using a femtosecond laser.

However, as an undesirable side-effect, the ionization locally heats and expands the host medium, for example the air, so that sound is produced. Indeed, laser plasma radiates not only visible light but also audible sound.

Such sound can be annoying for users/viewers of the hologram.

There is thus a need for a method for generating a hologram that produces a more acceptable sound.

**3. Summary**

The present disclosure relates to a method for generating a holographic version of a video content, using a laser display system, said method comprising:

- obtaining at least one (desired) audio content,
- setting at least one parameter of the laser display system or of the video content, taking account of said audio content,
- generating the holographic version of the video content from a laser-induced plasma, the sound produced by the laser-induced plasma being shaped, through the settings, to reproduce said audio content.

The present disclosure thus proposes a new solution for generating a hologram, that enables to exploit the sound inevitably produced by the ionization of the host medium (laser-induced plasma), for example the air, in the laser display system.

More specifically, the present disclosure aims at shaping/modulating such sound to reproduce a desired audio content. For example, the audio content can be an audio watermark, a part of an audio signal that accompanies the video content, etc.

According to a specific embodiment, the audio content to be reproduced can be inaudible (i.e., for example, outside the range of human hearing or "hidden" in the sound produced by the laser-induced plasma). This is for instance the case when the audio content to be reproduced is a watermark.

According to another specific embodiment, the audio content to be reproduced can be audible (i.e. in the range of human hearing). This is for instance the case when the audio content to be reproduced is a part of an audio signal that accompanies the video content.

In this way, audio information can be transmitted in addition to visual information, and the laser display system can produce both audio information and visual information at the same time. Such visual information can either represent a video content, an image, or any multimedia content.

It is also possible to deliver both a part of an audio signal that accompanies the video content (audible for human hearing) and an acoustic watermark (which can be inaudible for human hearing) at the same time.

In particular, setting at least one parameter of the laser display system comprises setting at least one of:

- a timing of at least one laser pulse,
- a duration of at least one laser pulse, and
- a number of laser pulses in at least one time frame.

Setting at least one parameter of the video content comprises, for example, setting at least one window function $s(t, x)$ representing the time duration $t$, in the holographic version of the video content, of at least one pixel at a position x of the video content.

The sound produced by the laser-induced plasma is indeed dependent upon several parameters, and the setting of one or several of these parameters makes it possible to "tune" such sound.

According to at least one embodiment, the laser display system comprises at least a controller, a laser device and an optical device, and the method comprises transmitting metadata from the controller to at least one of said laser device and said optical device, in order to set said at least one parameter.

In this way, additional or modified information are exchanged within the laser display system, to set one or several parameters.

According to at least one embodiment, the metadata are determined by minimizing a cost function depending on the audio content and on a representation of the sound produced by a laser-induced plasma.

Another aspect of the present disclosure relates to a computer program product downloadable from a communication network and/or recorded on a medium readable by computer and/or executable by a processor comprising software code adapted to perform the above-mentioned method for generating a holographic version of a video content, in any of its embodiments, when it is executed by a computer or a processor.

In addition, another aspect of the present disclosure relates to a non-transitory computer-readable carrier medium storing a computer program product which, when executed by a computer or a processor, causes the computer or the processor to carry out the above-mentioned method for generating a holographic version of a video content, in any of its embodiments.

The present disclosure also pertains to a laser display system for generating a holographic version of a video content, comprising at least one processor adapted and configured to:

- obtain at least one audio content,
- set at least one parameter of the laser display system or of the video content, taking account of said audio content,
- generate the holographic version of the video content from a laser-induced plasma, the sound produced by the laser-induced plasma being shaped, through the settings, to reproduce said audio content.

Such laser display system is particularly adapted for implementing the method for generating a holographic version of a video content according to the present disclosure. It could comprise the different characteristics pertaining to the method according to any embodiment of the disclosure, which can be combined or taken separately. In other words, such a system is adapted to carry out any of the execution modes of the method for generating a holographic version of a video content according to the present disclosure.

Thus, the characteristics and advantages of this system are the same as the disclosed method for generating a holographic version of a video content in any of its different embodiments.

The present disclosure also pertains to a laser display system for generating a holographic version of a video content, comprising:

- means for obtaining at least one audio content,
- means for setting at least one parameter of the laser display system or of the video content, taking account of said audio content,
- means for generating the holographic version of the video content from a laser-induced plasma, the sound produced by the laser-induced plasma being shaped, through the settings, to reproduce said audio content.

According to an embodiment, the laser display system comprises at least a controller, a laser device and an optical device. According to this embodiment, the controller comprises said at least one processor, and the laser device is a femtosecond or nanosecond laser.

The hologram generated according to the disclosure is thus harmless for a user / viewer who touch the hologram.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

## 4. Brief description of the drawings

The disclosure will be better understood and illustrated by means of the following embodiment and execution examples, in no way limitative, with reference to the appended figures in which:

- Figure 1 is a flow chart illustrating the main steps for generating a holographic version of a video content according to an embodiment of the disclosure;
- Figure 2 illustrates a laser display system that can be used to implement the method for generating a holographic version of a video content according to an embodiment of the disclosure;
- Figure 3 is a block diagram illustrating an example of controller of the laser display system of Figure 2.

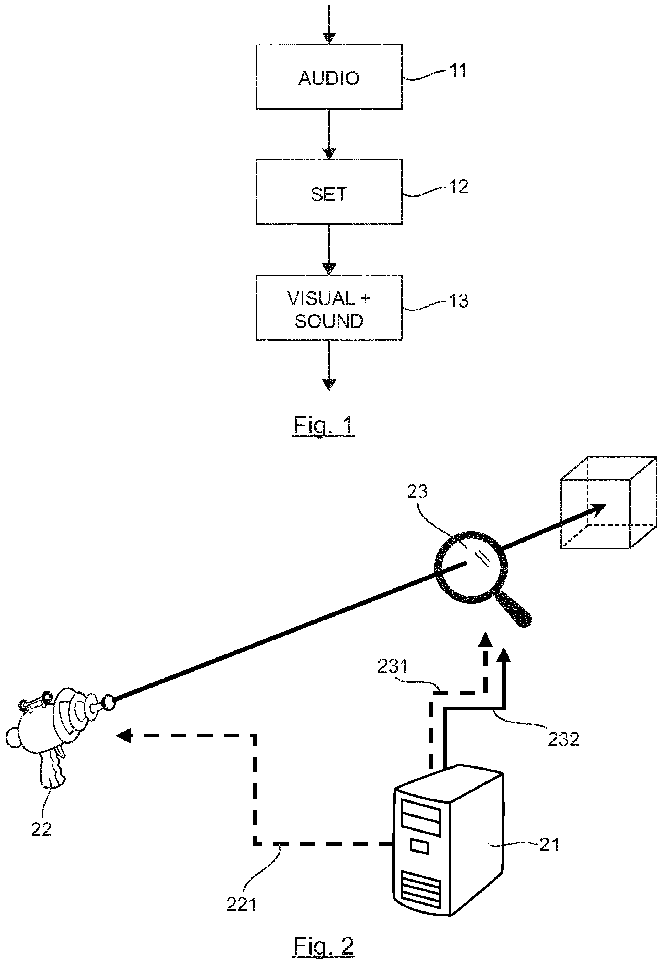

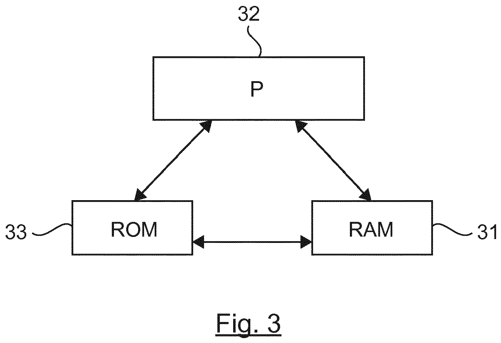

In Figures 1 and 3, the represented blocks are purely functional entities, which do not necessarily correspond to physically separate entities. Namely, they could be developed in the form of software, hardware, or be implemented in one or several integrated circuits, comprising one or more processors.

## 5. Description of embodiments

It is to be understood that the figures and descriptions of the present disclosure have been simplified to illustrate elements that are relevant for a clear understanding of the present disclosure, while eliminating, for purposes of clarity, many other elements found in typical laser display systems.

The general principle of the disclosure relies on a specific shaping/modulation of the sound inevitably produced by the ionization of the host medium, for example the air, in a laser display system, in order to transmit audio information in addition to visual information. In this way, the holographic version of a video content, for example, can be accompanied with a specific audio signal, like an audio watermark, a desired sound or music, etc.

In other words, the disclosure enables a laser display system to generate a visual display in conjunction with an audio display, so that new use cases are enabled, such as for example:

- watermarking of hologram;
- reduction of the sound generated by the laser display system by directing the sound to be more similar to a desired audio content.

The laser display system may then generate all the audio (inevitable sound, and music accompanying the hologram), or it may be used in conjunction with a conventional speaker system.

The main steps of the method for generating a holographic version of a video content according to an embodiment of the disclosure are illustrated in **Figure 1.** Such method can be implemented in a laser display system, that takes a video content to be displayed in the air in input, and that delivers a holographic version of the video content as output.

In block 11, at least one audio content is obtained and entered as input of the laser display system (audio watermark, a desired sound or music, etc.).

Such audio content is used, in block 12, to set at least one parameter of the laser display system or of the video content.

A specific setting/tuning of one or more parameters of the laser display system or of the video content can indeed modify the sound generated by ionizing for example the air.

More specifically, the inventors demonstrated that the sound generated by a laser display system can be modeled using a representation depending on parameters of the laser display system or of the video content.

For example, let us denote the sound created from the combustion of air (or other host medium) for one laser pulse (of one of the pixels of the video content to be displayed) by $h(t)$. Let's assume that the function is independent of the pixel coordinate $x$ in the video content to be displayed and has limited support $\pm\,\delta_t$ in the time domain. Let us also denote the firing functionality of the laser pulse (of a laser device of the laser display system) by a train of Dirac delta functions as $f(t,\,\delta_f)$ with the pulse period of $\delta_f$. The temporal support of the activation duration of the pixel at coordinate $x$ in the video content to be displayed is denoted by a window function $s(t, x)$.

In one embodiment, the functions $h(t)$ and $f(t)$ are related to the host medium and manufacturing of the laser display system, whereas the window function $s(t, x)$ is content dependent. For instance, the window function can be seen as a "box" function in time. The duration t of this function can thus be defined as a variable, and the "box" can be stretched more or less depending on the audio content to be reproduced.

The sound or noise $n(t)$ inevitably produced by the laser display system playing a video content, i.e. generating a holographic version of the video content, can be expressed as follows:

- in the time domain:

$$n\left(t, \delta_f(t)\right) = \sum_x \left[h(t) * f\left(t, \delta_f(t)\right)\right] \cdot s(t, x)$$

- or in the frequency domain:

$$N\left(z, \Delta_f(z)\right) = \sum_x \left[H(z) \cdot F\left(z, \Delta_f(z)\right)\right] * S(z, x)$$

Changing the period $\delta_f(t)$ (respectively $\Delta_f(z)$) of the train of Dirac deltas $f(t, \delta_f)$ (resp. $F(z, \Delta_f(z))$) over time (resp. frequency), for example by modifying a timing of at least one laser pulse, a duration of at least one laser pulse, and/or a number of laser pulses in at least one time frame, thus results in a modification of the sound produced by the laser display system.

In a similar manner, changing the window function $s(t, x)$ (resp. $S(z, x)$), for example by modifying the time duration $t$ (resp. $z$), in the holographic version of the video content, of at least one pixel at a position $x$ of the video content, results in a modification of the sound produced by the laser display system.

Such parameters can thus be set to particular values to shape/modulate the sound produced by the laser display system.

Once the parameters of the laser display system and/or of the video content have been set, the holographic version of the video content can be generated by the laser display system in block 13, from a laser-induced plasma. Through the settings of block 12, the sound produced by the laser-induced plasma is shaped to reproduce the desired audio content.

Referring now to **Figure 2,** we illustrate an embodiment of the disclosure, in which the laser display system comprises at least:

- a controller 21, for example a computing device,
- a laser device 22, for example a nanosecond or femtosecond laser, and
- an optical device 23, for example several lenses.

According to this embodiment, the audio content to be reproduced is obtained by the controller 21. The controller 21 generates metadata to be transmitted to the laser device 22 and/or to the optical device 23, based on the audio content. Such metadata can be used to set at least one parameter of the laser display system or of the video content to be displayed.

As illustrated in Figure 2, the metadata 221 transmitted from the controller 21 to the laser device 22, illustrated with a dashed line, comprises, for example, additional laser timing and/or pulse width control information according to at least one embodiment. The metadata 231 transmitted from the controller 21 to the optical device 23, illustrated with a dashed line, comprises, for example, additional or modified optical control information according to at least one embodiment. The data 232 transmitted from the controller 21 to the optical device 23, illustrated with a full line, comprises for example classical optical control information.

Three examples of metadata that can be used to set one or more parameters of the laser display system or of the video content to be displayed are described below. It can be noted that the first, second and/or third examples could be implemented together, i.e. metadata can comprise, for example, both a laser frequency pattern and a window function / modification of a window function.

According to a first example, the metadata comprises at least one pattern defining the timing and duration of at least one laser pulse over at least one time frame, said metadata being transmitted either in the time domain or in the frequency domain.

In this first example, the metadata can be determined by the controller 21, using the audio content obtained by the controller 21, and then transmitted to the laser device 22.

The metadata according to this first example can thus be used to set, for instance, the laser pulse period $\delta_f$ of the train of Dirac deltas over time, $f(t, \delta_f)$, to deliver/reproduce a specific audio content. Such setting of the laser pulse period $\delta_f(t)$ over time can be used to encode, for example, a watermark function. The controller 21 thus provides metadata to the laser device 22 that introduces a pattern in the frequency of the laser pulses. The pattern could be, according to at least one embodiment, negligible in support compared to the minimum perceivable frequency, for hiding the created visual signature - introduced by the modification of the original settings - from a user / viewer of the hologram.

The laser device 22 should thus be able to receive the metadata transmitted by the controller 21, to decode it and to vary accordingly the laser pulse period over time. It can be noted that there might be limits to the amount of pulse period variation that can be handled by the laser device 22. The hardware limitations of the laser display system should thus be considered when designing the watermark, or more generally the audio content.

To deliver/reproduce other types of content, for example a part of an audio signal that accompanies the video content (i.e. a content dependent audio signal), the firing frequency $\Delta_f$ of the laser device 22 can be adapted to approximate the desired audio content.

According to a specific embodiment, the metadata can be determined by minimizing a cost function depending on the spectral response of the audio content $D(z)$ and on the representation of the sound produced by a laser-induced plasma in the frequency domain $N(z, \Delta_f(z))$:

$$argmin_{\Delta_f} \| N\left(z, \Delta_f(z)\right) - D(z) \|_2^2$$

Such optimization can make the noise response $N(z, \Delta_f(z))$ as similar as possible to the desired audio content $D(z)$ by modulating the firing frequency $\Delta_f(z)$.

Of course, such cost function can also be expressed and minimized in the time domain:

$$argmin_{\delta_f} \| n\left(t, \delta_f(t)\right) - d(t) \|_2^2$$

where is $d(t)$ the audio content in the time domain.

Once the parameters of the laser display system are set, the laser display system can generate the hologram with a sound reproducing the desired audio content.

Optionally, the desired audio content may also be sent to an additional loudspeaker system.

It should be noted that working in the time-frequency domain is just an example. The approximation is simplified in this domain, since audio signals are usually sparse in this domain.

Finally, according to this first example, the metadata will contain $\delta_f(t)$ or $\Delta_f(z)$, whose presence is detectable.

According to a second example, the metadata comprises at least one window function representing the time duration $t$, in the holographic version of the video content, of at least one pixel at a position $x$ of the video content, said metadata being transmitted either in the time domain or in the frequency domain.

In this second example, the metadata can be determined by the controller 21, using the audio content obtained by the controller 21, and then transmitted to the optical device 23.

The metadata according to this second example can thus be used to set at least one temporal window function $s(t,x)$ for one or several pixels of the video content, to deliver/reproduce a specific audio content. Such setting of the temporal window(s) can be used to encode a watermark or a part of an audio signal that accompanies the video content.

The controller 21 thus provides metadata to the optical device 23 that modifies the visual content in the temporal domain in a limited support of the laser display system so that the sound produced through the host medium ionization reproduces the desired audio content.

According to this second example, either the video content is directly modified or the modification is postponed to the time of rendering (by modifying the time duration $t$, in the holographic version of the video content, of at least one pixel at a position $x$ in the video content, called a "modified pixel").

According to at least one embodiment, the optical device 23 should thus be able to receive the metadata transmitted by the controller 21, to decode it and to modify accordingly the time duration t, in the hologram, of the modified pixel(s).

According to a third example, the metadata comprises at least one modification to be applied to at least one window function $s(t,x)$ representing the time duration $t$, in the holographic version of the video content, of at least one pixel at a position $x$ of the video content, said metadata being transmitted either in the time domain $\delta_s(t,x)$ or in the frequency domain $\Delta_s(z,x)$.

In this third example, the metadata can be determined by the controller 21, using the audio content obtained by the controller 21, and then transmitted to the optical device 23.

As per the second example, the metadata according to this third example can be used to set at least one temporal window function $s(t, x)$ for one or several pixels of the video content, to deliver/reproduce a specific audio content. Such setting of the temporal window(s) can be used to encode a watermark or a part of an audio signal that accompanies the video content. Either the video content is directly modified, or the modification is postponed to the time of rendering (by modifying the time duration $t$, in the hologram, of at least one pixel at a position $x$ in the video content).

In particular, according to the third example, the position x of the modified pixel(s) and the window size modification $\delta_s(x,t)$ are both encoded as metadata.

According to at least one embodiment, the optical device 23 should thus be able to receive the metadata transmitted by the controller 21, to decode it and to modify accordingly the time duration $t$, in the hologram, of the modified pixel(s).

In both the second and third examples, the coordinates $x$ of the modified pixels can be chosen so that a modification of the time duration in the hologram of the modified pixels doesn't create visible artifacts in the hologram. In particular, it can be noted that changing the size of the temporal window with the same order of magnitude as the laser firing pulses $\delta_f$ is not perceivable by a user / viewer, due to the comparatively low temporal resolution of the human eye.

According to the different embodiments, the shaping/modulation of the sound produced by the laser-induced plasma can impact, or not, the holographic version of the video content from the point of view of a user / viewer.

For example, according to at least one embodiment, the viewer can't see any difference between a hologram generated according to the present principles (with a shaped sound) and a hologram generated differently (with a "basic" sound, not shaped). There the constraints on the amount of signal variations will guaranty the same visual output to the viewer eyes (considering human's visual system limitations in, for example, the temporal domain).

According to at least another embodiment, the viewer can see a difference between a hologram generated according to the present principles and a hologram generated differently.

The video signal can indeed be exploited (marginally or completely) to optimize the audio.

In particular, the difference can be in favor of the video, for example it can add intensity variations as a way of enhancing the video content. The video and audio signal can thus be optimized together. For example, the same pixel can be fired multiple times with short pulse widths, where the number of times the pixel is drawn within a given frame determining how bright the pixel will be. These multiple firings could then also be modulated, as described in the previous equations. According to this embodiment, the sound produced by the laser display system can thus depend on the color intensity of the pixel.

It can be noted that, according to the different examples above, a recording of the sound produced by the laser display system can reveal the underlying pattern, and can thus be used to detect a watermark or an audio signal that accompanies the video content.

Even if the audio content to be reproduced is not audible, it can thus still be detected.

It can also be noted that the laser display system illustrated in Figure 2 is just an example. Other laser display system can be used, such as for example the one illustrated in the document "Fairy Lights in Femtoseconds: Aerial and Volumetric Graphics Rendered by Focused Femtosecond Laser Combined with Computational Holographic Fields" previously cited. In this case, metadata used to set the parameters of the laser display system can be sent to a spatial light modulator (SLM).

Referring now to **Figure 3,** we illustrate the structural blocks of an exemplary controller that can be used in a laser display system for implementing the method for generating a holographic version of a video content according to at least one embodiment of the disclosure.

In an embodiment, a controller for implementing the disclosed method comprises a non-volatile memory 33 (e.g. a read-only memory (ROM) or a hard disk), a volatile memory 31 (e.g. a random access memory or RAM) and a processor 32. The non-volatile memory 33 is a non-transitory computer-readable carrier medium. It stores executable program code instructions, which are executed by the processor 32 in order to enable implementation of the method described above in its various embodiments.

Upon initialization, the aforementioned program code instructions are transferred from the non-volatile memory 33 to the volatile memory 31 so as to be executed by the processor 32. The volatile memory 31 likewise includes registers for storing the variables and parameters required for this execution.

The steps of the method for generating a holographic version of a video content according to at least one embodiment of the disclosure may be implemented equally well:

- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

Such controller can control at least a laser device and an optical device, generate metadata from at least one (desired) audio content, and transmit the metadata to at least one of said laser device and optical device.

**Claims**

1. A method for generating a holographic version of a video content, using a laser display system, said method comprising:

   - obtaining (11) at least one audio content,
   - setting (12) at least one parameter of the laser display system or of the video content, taking account of said audio content,
   - generating (13) the holographic version of the video content from a laser-induced plasma, the sound produced by the laser-induced plasma being shaped, through the settings, to reproduce said audio content.

2. The method according to claim 1, wherein setting at least one parameter of the laser display system comprises setting at least one of:

   - a timing of at least one laser pulse,
   - a duration of at least one laser pulse,
   - a number of laser pulses in at least one time frame.

3. The method according to any one of claims 1 and 2, wherein setting at least one parameter of the video content comprises setting at least one window function representing the time duration $t$, in the holographic version of the video content, of at least one pixel at a position $x$ of the video content.

4. The method according to any one of claims 1 to 3, wherein said laser display system comprises at least a controller, a laser device and an optical device, and wherein said method comprises transmitting metadata from the controller to at least one of said laser device and said optical device, in order to set said at least one parameter.

5. The method according to claim 4, wherein said metadata comprises at least one pattern defining the timing and duration of at least one laser pulse over at least one time frame, said metadata being transmitted either in the time domain or in the frequency domain.

6. The method according to any one of claims 4 and 5, wherein said metadata comprises at least one window function representing the time duration $t$, in the holographic version of the video content, of at least one pixel at a position $x$ of the video content, said metadata being transmitted either in the time domain or in the frequency domain.

7. The method according to any one of claims 4 and 5, wherein said metadata comprises at least one modification to be applied to at least one window function representing the time duration $t$, in the holographic version of the video content, of at least one pixel at a position $x$ of the video content, said metadata being transmitted either in the time domain or in the frequency domain.

8. The method according to any one of claims 4 to 7, wherein said metadata are determined by minimizing a cost function depending on the audio content and a on representation of the sound produced by a laser-induced plasma.

9. The method according to claim 8, wherein said cost function, in the frequency domain, is:

$$argmin_{\Delta_f} \parallel N\left(z, \Delta_f(z)\right) - D(z) \parallel_2^2$$

where:

   $D(z)$ is the spectral response of the audio content, at frequency $z$;

$N(z,\Delta_f(z))$ is the spectral response of the sound produced by a laser-induced plasma, at frequency z, assuming a firing frequency of the laser pulse $\Delta_f(z)$, such that:

$$N\left(z, \Delta_f(z)\right) = \sum_{x}\left[H(z) \cdot F\left(z, \Delta_f(z)\right)\right] * S(z, x)$$

where:

> $H(z)$ is the spectral response of the sound produced the laser induced plasma for one pixel at a position $x$;
> $F(z,\Delta_f(z))$ is the spectral response of the firing function of the laser pulse assuming a firing frequency $\Delta_f(z)$; and
> $S(z, x)$ is the spectral response of the window function.

**10.** The method according to any one of claims 1 to 9, wherein said audio content is an audio watermark.

**11.** A computer program product downloadable from a communication network and/or recorded on a medium readable by computer and/or executable by a processor comprising software code adapted to perform a method according to anyone of claims 1 to 10 when it is executed by a processor.

**12.** A laser display system for generating a holographic version of a video content, comprising at least one processor adapted and configured to:

> - obtain at least one audio content,
> - set at least one parameter of the laser display system or of the video content, taking account of said audio content,
> - generate the holographic version of the video content from a laser-induced plasma, the sound produced by the laser-induced plasma being shaped, through the settings, to reproduce said audio content.

**13.** The laser display system according to claim 12, comprising at least a controller, a laser device and an optical device, wherein said controller comprises said at least one processor, and wherein said laser device is a femtosecond or nanosecond laser.

AUDIO — 11

SET — 12

VISUAL +
SOUND — 13

Fig. 1

23

231

232

22

221

21

Fig. 2

Fig. 3

| | Europäisches Patentamt<br>European Patent Office<br>Office européen des brevets | **EUROPEAN SEARCH REPORT** | Application Number<br>EP 17 30 6784 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/293259 A1 (OCHIAI YOICHI [JP] ET AL) 12 October 2017 (2017-10-12)<br>* paragraphs [0001], [0010] - [0014], [0025], [0070] - [0096], [0242] - [0326]; figures 1, 5, 10-14, 25-43 * | 1-13 | INV.<br>G03H1/22<br>G03H1/00 |
| A | YOICHI OCHIAI: "Aerial interaction with femtosecond laser induced plasma", 20161128; 20161205 - 20161208, 28 November 2016 (2016-11-28), pages 1-2, XP058306893,<br>DOI: 10.1145/2992138.2992153<br>ISBN: 978-1-4503-4548-4<br>* the whole document * | 1-13 | |
| A,D | YOICHI OCHIAI ET AL: "Fairy Lights in Femtoseconds : Aerial and Volumetric Graphics Rendered by Focused Femtosecond Laser Combined with Computational Holographic Fields",<br>ACM TRANSACTIONS ON GRAPHICS (TOG), vol. 35, no. 2, 19 February 2016 (2016-02-19), pages 1-14, XP055481553,<br>US<br>ISSN: 0730-0301, DOI: 10.1145/2850414<br>* the whole document * | 1-13 | TECHNICAL FIELDS SEARCHED (IPC)<br><br>G03H<br>G06T |
| A | Yoichi Ochiai: "Fairy Lights in Femtoseconds: Tangible Holographic Plasma (SIGGRAPH)",<br>youtube,<br>22 June 2015 (2015-06-22), page 1 pp., XP054978399,<br>Retrieved from the Internet:<br>URL:https://www.youtube.com/watch?v=AoWi10YVmfE<br>[retrieved on 2018-06-07]<br>* the whole document * | 1-13 | |

The present search report has been drawn up for all claims

| Place of search | Date of completion of the search | Examiner |
|---|---|---|
| Munich | 7 June 2018 | Lutz, Christoph |

## ANNEX TO THE EUROPEAN SEARCH REPORT
## ON EUROPEAN PATENT APPLICATION NO.

EP 17 30 6784

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2018

| Patent document cited in search report | Publication date | Patent family member(s) | Publication date |
|---|---|---|---|
| US 2017293259 A1 | 12-10-2017 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YOICHI OCHIAI et al.** Fairy Lights in Femtoseconds: Aerial and Volumetric Graphics Rendered by Focused Femtosecond Laser Combined with Computational Holographic Fields. *ACM Trans. Graph.,* February 2016, vol. 35 (2